# EUROPEAN PATENT APPLICATION

(11) **EP 4 776 218 A1**
(43) Date of publication of application: **15.07.2026**
(21) Application number: 26151151.3
(22) Date of filing: 09.01.2026
(51) Int. Cl.: G06T 5/60, G06T 5/70

(54) **METHOD AND APPARATUS FOR PERFORMING IMAGE ENHANCEMENT USING A NEURAL NETWORK IN A MEDICAL IMAGING SYSTEM**

(30) Priority: 10.01.2025 US 202563743828 P; 30.12.2025 US 202519436937
(71) Applicant: The Regents of the University of California, Oakland, CA 94607 (US); Canon Medical Systems Corporation, Otawara-shi, Tochigi 324-0036 (JP)
(72) Inventor: TSAI, Yu-Jung, Otawara-shi (JP); QI, Jinyi, Oakland (US); VERLEKER, Akshay Prabhu, Otawara-shi (JP); KOLTHAMMER, Jeffrey, Otawara-shi (JP)
(74) Representative: Marks & Clerk LLP

(57) **Abstract**

A method for performing neural-network-based image enhancement in a medical imaging system, the method comprising: acquiring an image of an imaging object, the acquired image including a plurality of patches, with adjacent patches having an overlapping region; using a trained neural network to perform image enhancement on the acquired image in a patch-by-patch manner; and assembling a neural-network-enhanced image, based on an output from the trained neural network and a first blending function, wherein the assembling step performs a weighted summation for each voxel in the overlapping regions based on the first blending function, so as to mitigate checkerboard artifacts in the neural-network-enhanced image.

## Description

### FIELD

The present application relates to medical imaging systems, including positron emission tomography (PET) scanners, Computed Tomography (CT) scanners, etc. Specifically, the application relates to image processing performed by artificial neural networks (ANNs) in medical imaging systems.

### DESCRIPTION OF THE RELATED ART

The potential applications of artificial neural networks (ANNs) in medical imaging systems have been widely explored in recent years. Comparing to other data formats, such as texts and numbers, network training and inferencing on images require much more storage space and computational power.

To accommodate the high computational demand of ANN-based image processing, several strategies are typically applied:
(1) leveraging multi-GPU (Graphics Processing Unit) computation,
(2) reducing image dimensions through down-sampling before feeding the images into the network, and
(3) cropping images into small volumes (i.e., patches) before feeding them into the network.

However, implementing multi-GPU computation requires substantial investment in hardware and infrastructure. As the scale of the problem increases, these investments need to be scaled-up correspondingly. This either leads to potential financial burden or limits the network architectures and designs that can be applied.

Down-sampling images to lower computational demand is an effective approach, but it often results in information loss, which is highly undesired in medical applications. The degree of information loss depends on the available computational power and the specific network architecture or design applied.

Given limited computational resources, performing image cropping before feeding the images into the network allows utilization of more complicated network architectures and designs, without compromising image information. As a result, this method has become a preferred solution in ANN-based image processing. However, this approach can introduce checkerboard artifacts when the network-processed patches are assembled back to the original image volume during inferencing.

Therefore, it is desirable to improve the ANN-based image processing to mitigate these limitations.

### SUMMARY

An embodiment of present application is directed to a method for performing neural-network-based image enhancement in a medical imaging system. The method includes: acquiring an image of an imaging object, the acquired image including a plurality of patches, with adjacent patches having an overlapping region; using a trained neural network to perform image enhancement on the acquired image in a patch-by-patch manner; and assembling a neural-network-enhanced image, based on an output from the trained neural network and a first blending function. The assembling step performs a weighted summation for each voxel in the overlapping regions based on the first blending function, so as to mitigate checkerboard artifacts in the neural-network-enhanced image.

Another embodiment of the present application is directed to a method for performing neural-network-based image enhancement in a medical imaging system. The method includes: receiving a neural-network-enhanced image that is generated based on image enhancement by a trained neural network on a first image of an imaging object, the first image including a plurality of patches, with adjacent patches having an overlapping region, the trained neural network performing the image enhancement in a patch-by-patch manner; obtaining another image of the imaging object that is different from the neural-network-enhanced image; and based on a blending function, using the neural-network-enhanced image and the another image to generate a second image of the imaging object, so as to mitigate checkerboard artifacts in the second image.

A further embodiment of the present application is directed to an apparatus for performing neural-network-based image enhancement in a medical imaging system, the apparatus comprising processing circuitry configured to acquire an image of an imaging object, the acquired image including a plurality of patches, with adjacent patches having an overlapping region; use a trained neural network to perform image enhancement on the acquired image in a patch-by-patch manner; and assemble a neural-network-enhanced image, based on an output from the trained neural network and a first blending function. The processing circuitry is further configured to, during assembling, perform a weighted summation for each voxel in the overlapping regions based on the first blending function, so as to mitigate checkerboard artifacts in the neural-network-enhanced image.

Note that this summary section does not specify every embodiment and/or incrementally novel aspect of the present application or claimed invention. Instead, the summary only provides a preliminary discussion of different embodiments and corresponding points of novelty. For additional details and/or possible perspectives of the invention and embodiments, the reader is directed to the Detailed Description section and corresponding figures of the present disclosure as further discussed below.

### BRIEF DESCRIPTION OF THE DRAWINGS

The application will be better understood in light of the description, which is given in a non-limiting manner, accompanied by the attached drawings in which:
FIGs. 1A and 1B illustrate an example of checkerboard artifacts observed in an image processed by a neural network in a patch-by-patch manner;
FIG. 2 illustrates a flow chart of an exemplary method for mitigating checkerboard artifacts in an image processed by a neural network, in accordance with embodiments of the present application;
FIG. 3 shows an exemplary data flow of an approach for mitigating checkerboard artifacts in an image processed by a neural network, in accordance with embodiments of the present application;
FIG. 4 shows an exemplary data flow of an approach for mitigating checkerboard artifacts in an image processed by a neural network, in accordance with embodiments of the present application;
FIG. 5A shows a perspective view of a positron emission tomography (PET) scanner that can be used with the techniques described herein;
FIG. 5B shows a schematic view of a PET scanner that can be used with the techniques described herein; and
FIGs. 6(a)-(d) show the structure for a ResNet, the weighting scheme for a weighted loss function, a sample coronal slice of a testing subject before and after applying 4-mm Gaussian smoothing, ResNet, ResNet_weighted and ResNet_weighted_SUVclip, and box plots of the liver NSTD across the testing subjects; and
FIGs. 7(a)-7(d) show the network structure for AiCE, a sample coronal slice of one testing subject before and after applying 4-mm Gaussian smoothing, AiCE-sharp, AiCE-standard and AiCE-smooth, box plots of the liver NSTD across the testing subjects, and correlation plots of lesion SUVmax in each of the AiCE images with respect to that in the 4-mm Gaussian filtered input image.

### DETAILED DESCRIPTION

Embodiments or examples for implementing various aspects of the present application may be as set forth in the following sections. Specific examples of components and arrangements are described below to simplify the present application. These are, of course, merely examples and are not intended to be limiting.

The order of discussion of the different steps as described herein is presented for the sake of clarity. In general, these steps can be performed in any suitable order. Additionally, although each of the different features, techniques, configurations, etc. herein may be discussed in different places of this application, it is intended that each of the concepts can be executed independently of each other or in combination with each other. Accordingly, the present application can be embodied and viewed in many different ways.

Furthermore, as used herein, the words "a," "an," and the like generally carry a meaning of "one or more," unless stated otherwise.

As discussed above, cropping images into smaller patches for neural network processing can result in checkerboard artifacts when the processed patches are reassembled into the original image volume during the inference phase.

One approach to eliminate these checkerboard artifacts is to perform inference directly on the original, uncropped image. However, this approach requires a GPU card with sufficient memory to handle the full image size, which is often impractical or even impossible in many cases. Alternatively, inference can be performed on the original image using a CPU (Central Processing Unit), but this will significantly increase the processing time.

Another approach to reduce the checkerboard artifacts is to introduce overlap between adjacent patches during preparation of the patches. Overlapping voxels are typically averaged when assembling patches back to the original image volume, and the larger the overlap, the weaker the artifacts. This method is referred to as the "overlap-and-average" method. However, in addition to increasing the total inferencing time, residual artifacts may still be observed, especially in uniform regions of the images.

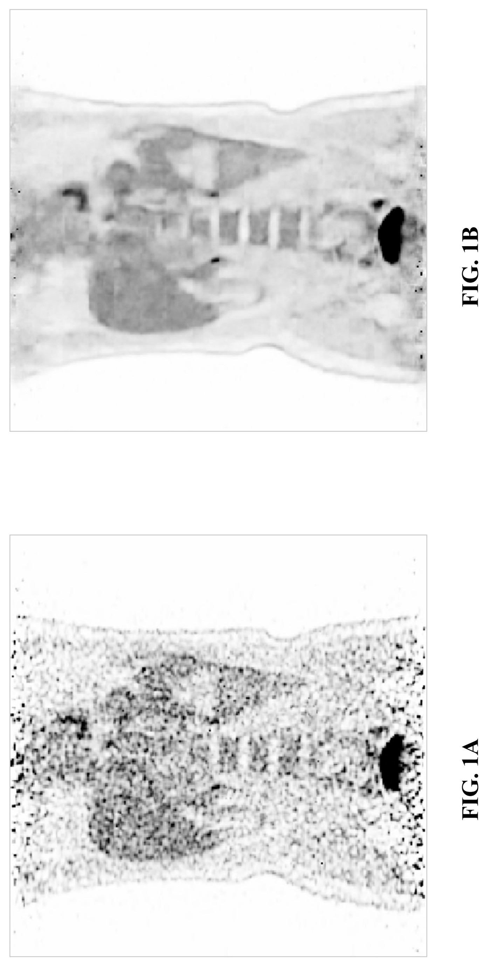

FIGs. 1A and 1B illustrate an example of checkerboard artifacts in an image processed by a neural network using the overlap-and-average method. FIG. 1A shows a sample coronal slice acquired from a ¹⁸F-FDG PET study, a valuable imaging tool in oncology. FIG. 1B shows the same image after processing with a denoising neural network in a patch-by-patch manner, followed by an overlap-and-average procedure to reduce checkerboard artifacts. The original image volume is 336 × 336 × 256 voxels. The patch size is 32 × 32 × 32 voxels, with a 16-voxel overlap between adjacent patches in all directions. Both images use the same display scale, [0 5]. As demonstrated in FIG. 1B, residual checkerboard artifacts are still visible, particularly in the liver region, despite the overlap-and-average process.

This disclosure provides an approach for assembling a network-processed image from patches, without introducing checkerboard artifacts along patch boundaries. The method uses weighted summations for overlapping voxels in adjacent patches, based on weights provided by a user-defined blending function. The blending function is designed to ensure smooth intensity transitions across patch boundaries, effectively eliminating checkerboard artifacts in the assembled image.

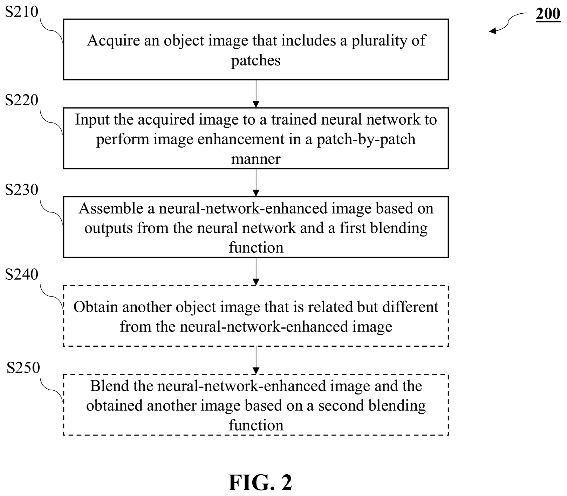

FIG. 2 shows a flow chart of an exemplary procedure 200 for using a neural network to perform image enhancement in a medical imaging system, in accordance with embodiments of the present application. The process begins with step S210, where an object image is acquired. For example, the object image can be acquired on an imaging object by the medical imaging system. The acquired image is divided into a plurality of patches, with overlapping regions arranged between neighboring patches.

In step S220, the acquired image is processed patch by patch using a trained neural network for image enhancement. The neural network can apply any desired enhancements to the input patches, including but not limited to, improved image quality, reduced noise, increased smoothness, sharper details, etc.

The neural network can either process all of the input patches or selectively process a subset that meets specific criteria. For example, the neural network can process only patches with apparent radiotracer activity above a predefined threshold. Accordingly, the neural network can be trained using only patches with apparent radiotracer activity above the predefined threshold. This selective processing can reduce computational time during both training and inference phases.

In step S230, the outputs from the neural network can be used to assemble a neural-network-enhanced image, based on a first blending function. Specifically, a weighted summation is applied to each voxel in the overlapping regions to mitigate checkerboard artifacts in the assembled image.

While the weighted summations based on the first blending function effectively mitigate most checkerboard artifacts, residual artifacts may still appear in certain areas, such as large, uniform, low-intensity regions (e.g., air backgrounds around the imaging object). To further remove these residual artifacts, optionally, additional processing can be applied to refine the affected areas.

In step S240, another related but distinct image of the imaging object is obtained. This image can originate from various sources, as long as it is relevant to the same imaging object and differs from the neural-network-enhanced image assembled in step S230. In step S250, the obtained another image is blended with the neural-network-enhanced image, based on a second blending function. By combining voxels from these two images, checkerboard artifacts can be further minimized throughout the entire image.

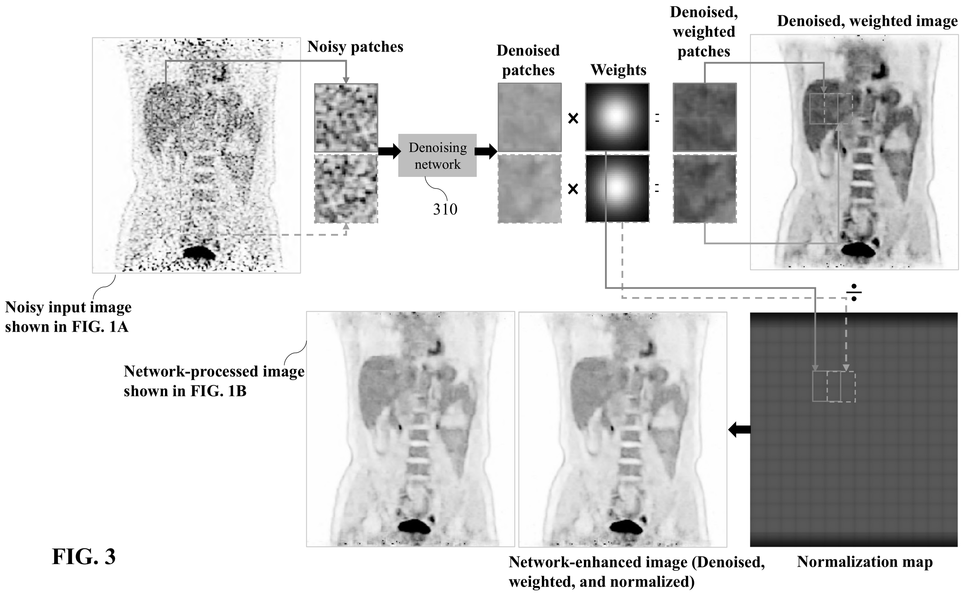

Using the example of the ¹⁸F-FDG PET image shown in FIG. 1A, FIG. 3 illustrates the process of performing weighted summations for overlapping voxels between adjacent patches, based on the first blending function. All images in FIG. 3 use the same display scale, [0 5]. For simplicity, the illustration is presented in two dimensions (2D).

As shown in FIG. 3, patches of FIG. 1A's noisy input image are processed by a denoising network 310 to generate denoised patches. These denoised patches are then multiplied by weights determined by the first blending function, resulting in denoised, weighted patches. Then, a denoised, weighted image can be assembled from the denoised, weighted patches.

To avoid introducing intensity changes in the assembled image, it is preferable to ensure that the sum of weights applied to each pixel equals 1. Alternatively, if the sum of weights is not always 1 across the image volume, a normalization map can be maintained to track the total weighting at each location. The assembled image can then be normalized by dividing it by this normalization map to correct any potential intensity variations caused by the weighting process.

As described above, the weights used in the weighted summations are determined by the first blending function. In FIG. 3, a Gaussian kernel function with a standard deviation equal to 1/4 of the patch size (sigma = 8) is utilized as an exemplary blending function. However, one skilled in the art will appreciate that the blending function can take various forms, provided that it ensures smooth intensity transitions across overlapping regions between the image patches.

Although FIG. 3 demonstrates the processing and reassembly of all patches of the input image, as discussed above, the denoising network 310 can also be configured to selectively process patches that meet predefined criteria. This approach can reduce the calculational time during the training and inference stages.

FIG. 3 further compares the image denoised, weighted, and normalized using the method described in this application with the network-processed image shown in FIG. 1B. As shown, the method of this application significantly reduces checkerboard artifacts, particularly in the liver region in the network-enhanced image.

When checkerboard artifacts are still visible in large, uniform, and low intensity regions, additional blending between corresponding voxels from relevant but different images can be further applied. This blending process operates on entire images instead of individual patches.

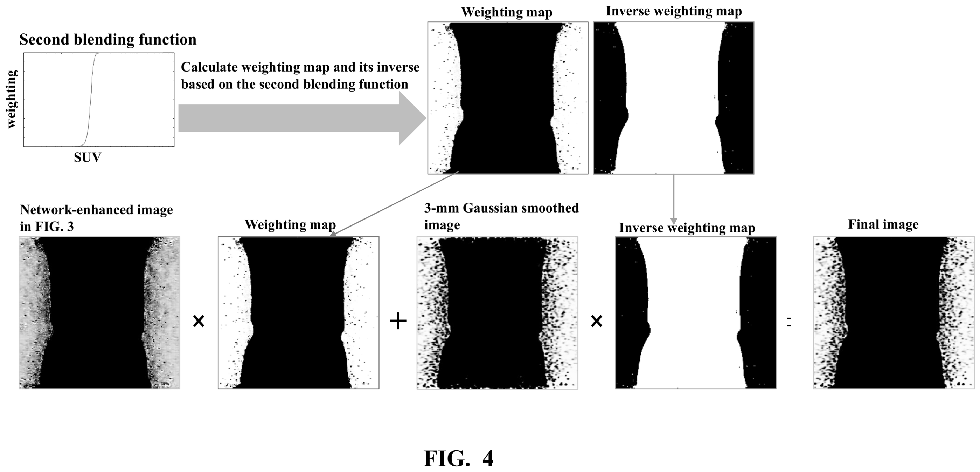

FIG. 4 illustrates the data flow in the process of performing weighted summations between corresponding voxels from two related but different images. To make the residual checkerboard artifacts in the air backgrounds more visible, all images in FIG. 4 are displayed using a low and narrow display scale of [0 0.02]. The illustration is presented in 2D for simplicity.

FIG. 4 illustrates the blending of two images, which are:
- Image A: the network-enhanced image shown in FIG. 3, and
- Image B: a smoothed version of the noisy input image shown in FIG. 1A, produced by a Gaussian filter with a full-width at half-maximum (FWHM) of 3 mm.

The weights assigned to voxels from the two images are determined by the second blending function. This blending function can be designed to ensure a smooth transition across the intensity range observed in the regions where the residual checkerboard artifacts need to be eliminated.

In some embodiments of this application, the second blending function has an active intensity window bounded by an upper and/or lower intensity limit. For instance, a sigmoid blending function with a lower bound of 0.012 and an upper bound of 0.1 in standardized uptake value (SUV) units is used in the example shown in FIG. 4. This active range covers the intensity distribution of the air background regions.

For example, the active intensity window of the second blending function can also guide the neural network in determining which patches to process. For instance, voxels in the original image with intensity values outside the bounded intensity window can stay unchanged by the neural network. These skipped voxels are replaced by corresponding voxels from the 3-mm Gaussian-smoothed image during the blending process shown in FIG. 4. By allowing the neural network to skip such voxels during the training and inference stages, both training and inference times can be reduced, leading to improved computational efficiency.

It should be noted that the sigmoid blending function described above is merely an example. The second blending function can take various forms. Additionally, one skilled in the art can design multiple blending functions according to local properties of the image volume and apply them to different image regions. As this approach allows incorporating multiple blending functions according to local image properties, more natural and effective artifact removal throughout the image volume can be expected.

As shown in FIG. 4, the weighting maps used for Image A and Image B are inverse to each other. For instance, when the weight for a voxel j from Image A is *wₐⱼ,* the weight for the corresponding voxel j' from Image B will be (1- *wₐⱼ*). In this way, the total weighting at each voxel in the image volume is always maintained at 1, so as to keep the voxel's original intensity unaffected.

Similarly to the approach described in FIG. 3, a normalization map can be used if the sum of weights does not always equal to 1 throughout the image volume. The normalization map tracks the total weights at each voxel, allowing for normalization to correct any potential intensity variations.

The embodiments described in this application provide an intensity blending strategy for eliminating checkerboard artifacts in images assembled from network-processed patches, while reducing the inferencing time significantly. By incorporating user-designed blending function(s) to achieve smooth intensity transitions, checkerboard artifacts can be effectively removed throughout the entire image volume.

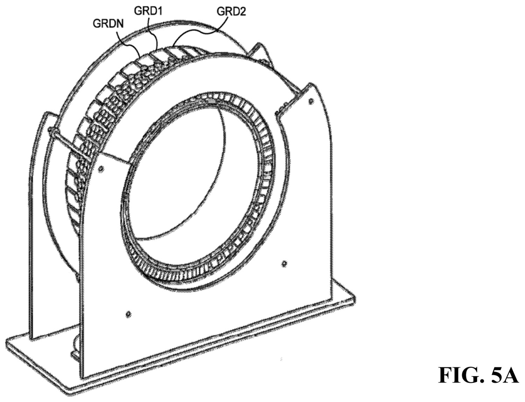

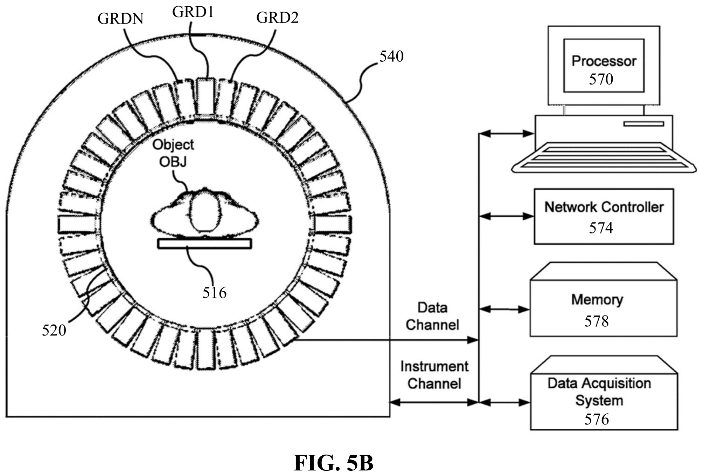

FIGs. 5A and 5B illustrate in implementation in which a medical imaging system includes a PET scanner that can implement the methods described in this application. It is important to note that the image preprocessing approach can be applied to other imaging modalities, including but not limited to X-ray/CT imaging, for example.

In FIG. 5A, the PET scanner includes a plurality of gamma-ray detectors (GRDs) (e.g., GRD1, GRD2, through GRDN) that are each configured as rectangular detector modules. Each GRD can include a two-dimensional array of individual detector crystals, which absorb gamma radiation and emit scintillation photons. The scintillation photons can be detected by a two-dimensional array of photodetectors or photosensors, e.g., photomultiplier tubes (PMTs), silicon photomultipliers (SiPMs), etc. A light guide can be disposed between the array of detector crystals and the photodetectors.

Each photodetector (e.g., PMT or SiPM) can produce an analog signal that indicates when scintillation events occur, and an energy of the gamma-ray producing the detection event. Moreover, the photons emitted from one detector crystal can be detected by more than one photodetector, and, based on the analog signal produced at each photodetector, the detector crystal corresponding to the detection event can be determined using Anger logic and crystal decoding, for example.

FIG. 5B shows one example of the arrangement of the PET scanner, in which the object OBJ to be imaged rests on a table 516 and the GRD modules GRD1 through GRDN are arranged circumferentially around the object OBJ and the table 516. The GRDs can be fixedly connected to a circular component 520 that is fixedly connected to a gantry 540. The gantry 540 houses many parts of the PET scanner. The gantry 540 of the PET scanner also includes an open aperture through which the object OBJ and the table 516 can pass, and gamma-rays emitted in opposite directions from the object OBJ due to an annihilation event can be detected by the GRDs and timing and energy information can be used to determine coincidences for gamma-ray pairs.

In FIG. 5B, circuitry and hardware are also shown for acquiring, storing, processing, and distributing gamma-ray detection data. The circuitry and hardware include: a processor 570, a network controller 574, a memory 578, and a data acquisition system (DAS) 576. The PET scanner also includes a data channel that routes detection measurement results from the GRDs to the DAS 576, the processor 570, the memory 578, and the network controller 574. The data acquisition system 576 can control the acquisition, digitization, and routing of the detection data from the detectors. In one implementation, the DAS 576 controls the movement of the bed 516. The processor 570 performs functions including reconstructing images from the detection data, pre-reconstruction processing of the detection data, and post-reconstruction processing of the image data, as discussed herein.

The processor 570 can be configured to perform various steps of the methods described herein and variations thereof. The processor 570 can include a CPU that can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VHDL, Verilog, or any other hardware description language and the code may be stored in an electronic memory directly within the FPGA or CPLD, or as a separate electronic memory. Further, the memory may be non-volatile, such as ROM, EPROM, EEPROM or FLASH memory. The memory can also be volatile, such as static or dynamic RAM, and a processor, such as a microcontroller or microprocessor, may be provided to manage the electronic memory as well as the interaction between the FPGA or CPLD and the memory.

Alternatively, the CPU in the processor 570 can execute a computer program including a set of computer-readable instructions that perform various steps of the described methods, the program being stored in any of the above-described non-transitory electronic memories and/or a hard disk drive, CD, DVD, FLASH drive or any other known storage media. Further, the computer-readable instructions may be provided as a utility application, background daemon, or component of an operating system, or combination thereof, executing in conjunction with a processor, such as a Xeon processor from Intel of America or an Opteron processor from AMD of America and an operating system, such as Microsoft VISTA, UNIX, Solaris, LINUX, Apple, MAC-OS and other operating systems known to those skilled in the art. Further, CPU can be implemented as multiple processors cooperatively working in parallel to perform the instructions.

The memory 578 can be a hard disk drive, CD-ROM drive, DVD drive, FLASH drive, RAM, ROM or any other electronic storage known in the art.

The network controller 574, such as an Intel Ethernet PRO network interface card from Intel Corporation of America, can interface between the various parts of the PET scanner. Additionally, the network controller 574 can also interface with an external network. As can be appreciated, the external network can be a public network, such as the Internet, or a private network such as an LAN or WAN network, or any combination thereof and can also include PSTN or ISDN sub-networks. The external network can also be wired, such as an Ethernet network, or can be wireless such as a cellular network including EDGE, 3G and 4G wireless cellular systems. The wireless network can also be WiFi, Bluetooth, or any other wireless form of communication that is known.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than the described embodiment. Various additional operations may be performed and/or described operations may be omitted in additional embodiments.

Numerous modifications and variations of the embodiments presented herein are possible in light of the above teachings. It is therefore to be understood that within the scope of the claims, the application may be practiced otherwise than as specifically described herein. The inventions are not limited to the examples that have just been described; it is in particular possible to combine features of the illustrated examples with one another in variants that have not been illustrated.

Embodiments of the present disclosure may also be as set forth in the following parentheticals.
(1) A method for performing neural-network-based image enhancement in a medical imaging system, the method comprising: acquiring an image of an imaging object, the acquired image including a plurality of patches, with adjacent patches having an overlapping region; using a trained neural network to perform image enhancement on the acquired image in a patch-by-patch manner; and assembling a neural-network-enhanced image, based on an output from the trained neural network and a first blending function, wherein the assembling step performs a weighted summation for each voxel in the overlapping regions based on the first blending function, so as to mitigate checkerboard artifacts in the neural-network-enhanced image.
(2) The method of (1), wherein the step of using the trained neural network to perform image enhancement further comprises: classifying the plurality of patches into a first group of patches and a second group of patches, based on a second blending function, using the trained neural network to perform image enhancement on each patch of the first group of patches in a patch-by-patch manner, to derive an enhanced first group of patches, and leaving the second group of patches unchanged by the trained neural network, and the assembling step further comprises assembling the enhanced first group of patches and the unchanged second group of patches to generate the neural-network-enhanced image.
(3) The method of (2), wherein the classifying step further comprises: determining an intensity window based on the second blending function, and for each patch of the plurality of patches, when the patch has an intensity range inside the determined intensity window, classifying the patch into the first group of patches, and when the patch has an intensity range outside the determined intensity window, classifying the patch into the second group of patches.
(4) The method of (3), wherein the trained neural network was trained using a set of input patches and a corresponding set of target patches, and each input patch in the set of input patches has an intensity range inside the determined intensity window.
(5) The method of (2), wherein the first blending function is predefined to maintain, across the overlapping regions associated with the first group of patches, an intensity transition smaller than a predefined threshold, so as to minimize the checkerboard artifacts in the neural-network-enhanced image.
(6) The method of (5), wherein the first blending function is a Gaussian kernel function with a standard deviation equal to a fraction of a patch size of the plurality of patches.
(7) The method of (1), wherein the assembling step further comprises, during the weighted summation for each voxel in the overlapping regions, keeping a sum of weights that is equal to 1.
(8) The method of (1), wherein the assembling step further comprises: during the weighted summations, when a sum of weights is not always 1 for the voxels in the overlapping regions, using a normalization map to record weights used for the voxels, and using the normalization map to cancel out intensity changes caused in the neural-network-enhanced image by the used weights.
(9) The method of (3), further comprising: obtaining another image of the imaging object that is different from the neural-network-enhanced image, and based on the second blending function, using the neural-network-enhanced image and the another image to generate a final image of the imaging object, so as to mitigate the checkerboard artifacts in the final image.
(10) The method of (9), wherein the another image is obtained by performing a Gaussian filtering on the acquired image.
(11) The method of (9), wherein the step of using the neural-network-enhanced image and the another image to generate the final image further comprises: based on the second blending function, generating a first weight map for the neural-network-enhanced image and a second weight map for the obtained another image, the first weight map and the second weight map being inverse of one another, and combining the neural-network-enhanced image and the obtained another image by performing a weighted summation based on the generated first and second weight maps, so as to mitigate checkerboard artifacts in the final image.
(12) The method of (9), wherein the second blending function is predefined to maintain, across the overlapping regions associated with the second group of patches, an intensity transition smaller than a predefined threshold, so as to minimize the checkerboard artifacts in the final image.
(13) The method of (3), wherein the determining step further comprises: determining the intensity window based on an active intensity range of the second blending function, such that among the plurality of patches, patches associated with the imaging object are classified into the first group of patches, and patches associated with an air background region are classified into the second group of patches.
(14) A method for performing neural-network-based image enhancement in a medical imaging system, the method comprising: receiving a neural-network-enhanced image that is generated based on image enhancement by a trained neural network on a first image of an imaging object, the first image including a plurality of patches, with adjacent patches having an overlapping region, the trained neural network performing the image enhancement in a patch-by-patch manner; obtaining another image of the imaging object that is different from the neural-network-enhanced image; and based on a blending function, using the neural-network-enhanced image and the another image to generate a second image of the imaging object, so as to mitigate checkerboard artifacts in the second image.
(15) The method of (14), wherein the another image is obtained by performing a Gaussian filtering on the first image.
(16) An apparatus for performing neural-network-based image enhancement in a medical imaging system, the apparatus comprising: processing circuitry configured to acquire an image of an imaging object, the acquired image including a plurality of patches, with adjacent patches having an overlapping region; use a trained neural network to perform image enhancement on the acquired image in a patch-by-patch manner; and assemble a neural-network-enhanced image, based on an output from the trained neural network and a first blending function, wherein the processing circuitry is further configured to, during assembling, perform a weighted summation for each voxel in the overlapping regions based on the first blending function, so as to mitigate checkerboard artifacts in the neural-network-enhanced image.
(17) The apparatus of (16), wherein the processing circuitry is further configured to: classify the plurality of patches into a first group of patches and a second group of patches, based on a second blending function, use the trained neural network to perform image enhancement on each patch of the first group of patches in a patch-by-patch manner, to derive an enhanced first group of patches, leave the second group of patches unchanged by the trained neural network, and assemble the enhanced first group of patches and the unchanged second group of patches to generate the neural-network-enhanced image.
(18) The apparatus of (17), wherein the processing circuitry is further configured to: determine an intensity window based on the second blending function, and for each patch of the plurality of patches, when the patch has an intensity range inside the determined intensity window, classify the patch into the first group of patches, and when the patch has an intensity range outside the determined intensity window, classify the patch into the second group of patches.
(19) The apparatus of (16), wherein the processing circuitry is further configured to: obtain another image of the imaging object that is different from the neural-network-enhanced image, and based on the second blending function, use the neural-network-enhanced image and the another image to generate a final image of the imaging object, so as to mitigate the checkerboard artifacts throughout the final image.
(20) The apparatus of (19), wherein the another image is obtained by performing a Gaussian filtering on the acquired image.

Numerous modifications and variations of the embodiments presented herein are possible in light of the above teachings. It is therefore to be understood that within the scope of the claims, the disclosure may be practiced otherwise than as specifically described herein.

Aspects of the present disclosure can be further described as follows.

Physiology-Informed Deep Convolutional Neural Network for ¹⁸F-FDG PET Image Denoising

Introduction: The diagnostic accuracy of positron emission tomography (PET) images is often affected by the noise level. Regularized reconstructions and post-reconstruction smoothing have been applied in practice to mitigate the noise with the need for tuning additional parameters to achieve good signal-to-noise tradeoff for different applications. In recent years, deep learning-based algorithms for PET image denoising have been widely explored due to their computational efficiency and potential to tackle more complicated scenarios than the conventional methods once properly trained. In this work, we propose two training strategies to improve the performance of the network by enhancing its attention to clinically relevant information. Both strategies are developed based on general knowledge of ¹⁸F-FDG distribution in clinical studies.

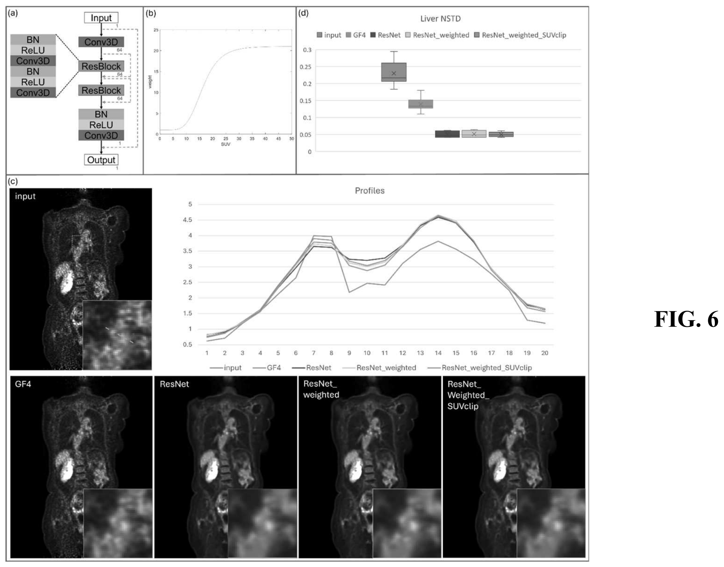

Method: This work employed a residual network (ResNet) for the image denoising task (FIG. 6(a)). The training dataset included 16 ¹⁸F-FDG studies acquired on a clinical PET-CT system (Cartesion Prime; Canon Medical Systems) in list-mode format and with a long-duration acquisition of 10 minutes per bed position. Each 10-minute list-mode data was randomly down-sampled to generate 6 noisy inputs equivalent to 30, 45, 60, 90, 120 and 180-second acquisitions. All data were reconstructed using 4 iterations of list-mode OSEM with 12 subsets. The image intensity was converted to standardized uptake value (SUV) units. The images reconstructed from the full-count data were post-smoothed using a 4-mm Gaussian filter and served as the training target. To accommodate our available computational resources, a patch-based training process was adopted. We developed a training strategy to compensate for the lack of high intensity features in the ¹⁸F-FDG images, incorporating a weighted loss function (FIG. 6(b)) that assigns a higher weight to the patches with SUV higher than 5, which is often associated with cancerous tissues. To prevent the learning of the network being driven by the high intensities of excreted ¹⁸F in the urinary system, we also implemented SUV clipping that sets the voxel SUVs higher than 20 to a value of 20. This SUV clipping also unified the intensity range of the training images. The network was trained with and without incorporating the weighted loss function and SUV clipping. The impact of them on the network performance was evaluated using 7 separate clinical whole-body ¹⁸F-FDG studies (2-minute acquisition per bed position) in terms of feature preservation and noise level reduction. The former was assessed using profiles, while the latter was quantified by the normalized standard deviation (NSTD) in a liver volume-of-interest. The results were compared with those for reference images, i.e. smoothed with a 4-mm Gaussian filter.

Results: A sample coronal slice of a testing subject for the ordinary ResNet, RestNet trained with the weighted loss function (ResNet_weighted) and ResNet trained with the weighted loss function as well as the SUV clipping (ResNet_weighted_SUVclip) are shown in FIG. 6(c) along with the corresponding noisy input before and after smoothing with a 4-mm Gaussian filter (GF4). Zoomed images on the mediastinum region and profiles across two small lesions in the region are also provided to facilitate visual assessment. One of the lesions is almost smeared-out in the ordinary ResNet image. The lesion is better preserved in the images from RestNet trained with the weighted loss function. All ResNet images show significant lower visual noise than the input and 4-mm Gaussian smoothed images. This is further demonstrated in the box plots of the liver NSTD across all testing images (FIG. 6(d). Among the box plots for the ResNets, the smallest variation in liver NSTD across the images is obtained when the SUV clipping is applied.

Discussion: We have designed two training strategies based on general knowledge of ¹⁸F-FDG distribution in clinical studies to improve network performance. In the application of ¹⁸F-FDG PET image denoising, the incorporation of the proposed weighted loss function and SUV clipping help preserve small lesions and reduce performance variation, respectively. Although the current application is focused on ¹⁸F-FDG PET image denoising, the strategies should be able to be applied to other applications with adequate modifications.

FIG. 6(a) Structure for the ResNet; FIG. 6(b) Weighting scheme for the weighted loss function; FIG. 6(c) Sample coronal slice of a testing subject before and after applying 4-mm Gaussian smoothing, ResNet, ResNet_weighted and ResNet_weighted_SUVclip; FIG. 6(d) Box plots of the liver NSTD across the testing subjects.

Aspects of the present disclosure can be further described as follows.

Performance Evaluation of a Physiology-Informed Deep Convolutional Neural Network for 18F-FDG PET Image Denoising

Introduction: Noise reduction is one of the most promising applications of deep learning-based algorithms in medical imaging. Recently, we developed a physiology-informed deep convolutional neural network that incorporates general knowledge of ¹⁸F-FDG distribution in clinical studies into the training process. The network, which is referred to as Advanced intelligent Clear-IQ Engine (AiCE), shows the potential to achieve significant noise reduction without compromising feature delineation and quantification. To provide insights into the clinical usefulness of AiCE, qualitative and quantitative evaluations on ¹⁸F-FDG PET images from 50 patients are reported in this study.

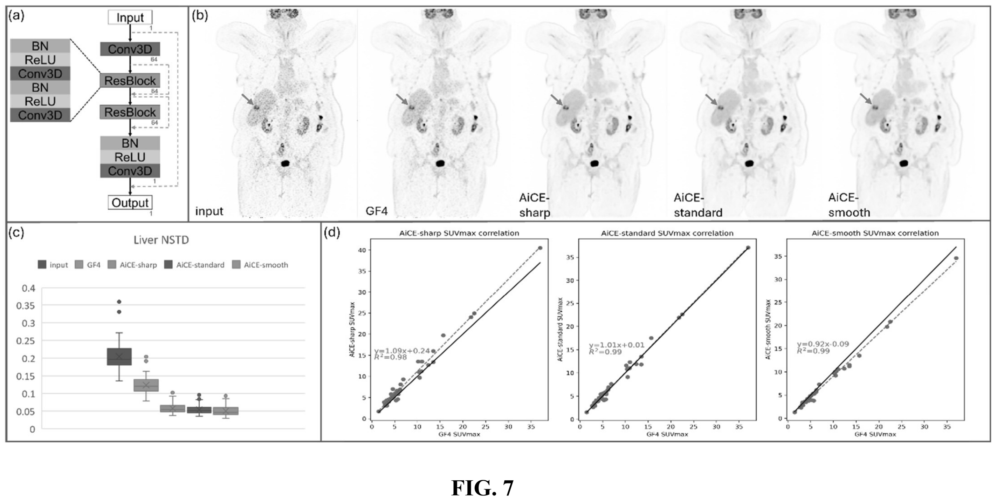

Method: The network architecture for AiCE can be found in FIG. 7(a). The training dataset consisted of 16 ¹⁸F-FDG PET studies acquired using a protocol of 10-minute per bed position on a Canon Medical Cartesion Prime PET/CT system in list-mode format. Low-count data that serve as noisy inputs for training were generated by randomly down-sampling each 10-minute list-mode data to 6 count levels equivalent to 30, 45, 60, 90, 120 and 180 seconds of acquisitions. Each data was then reconstructed using 4 iterations of ordered-subsets expectation maximization (OSEM) with 12 subsets and converted to standardized uptake values (SUV) units. To accommodate the wide range of preferences in image noise level among physicians, AiCE offered 3 levels of denoising, which was referred to as AiCE-sharp, AiCE-standard and AiCE-smooth in this study. This was achieved by using the reconstructed images for the full-count data post-smoothed with 2-, 3- and 4-mm Gaussian filters as the target for the 3 levels, respectively. A weighted loss function that enhances the attention of the network to SUVs potentially associated with cancerous tissues was incorporated. To unify the intensity range of the training images and avoid the learning of the network being driven by the high intensities in the urinary system, SUV clipping that replaces the SUVs higher than a certain threshold to the threshold was applied. The AiCE networks were tested on 50 whole-body ¹⁸F-FDG PET studies acquired using a protocol of 2-minute per bed position. In addition to visual assessment, normalized standard deviation (NSTD) in a liver volume-of-interest (VOI) and maximum SUV (SUVmax) of 42 lesions delineated by an experienced physician were also measured. Linear regression was performed using the corresponding SUVmax in the noisy input post-smoothed with a 4-mm Gaussian filter as the reference for each AiCE denoising level.

Results: A sample coronal slice of one testing subject for each denoising level of AiCE are provided in FIG. 7(b) along with the noisy input before and after smoothing with a 4-mm Gaussian filter. Fine lesion structures (as indicated with red arrows) are preserved in the AiCE images with slight smoothness in the AiCE-smooth image as compared to other images. All AiCE images show significant lower visual noise than the input and the 4-mm Gaussian filtered images. The lowest visual noise level is observed in the AiCE-smooth image, followed by the AiCE-standard and AiCE-sharp images. The observation is consistent with the box plots of the liver NSTDs across the testing subjects shown in FIG. 7(c). The lesion SUVmax in each of the AiCE images was plotted against the corresponding value in the 4-mm Gaussian filtered input image and linear regression was performed (FIG. 7(d)). The lesion SUVmax in the AiCE images are highly correlated with that in the 4-mm Gaussian filtered image, regardless of the AiCE denoising level. The regression lines also indicate that the application of AiCE-sharp/AiCE-smooth leads to a slightly higher/lower lesion SUVmax than that in the 4-mm Gaussian filtered images. The AiCE-standard provides images with comparable lesion SUVmax to the 4-mm Gaussian filtered images.

Discussion: We have developed a physiology-informed deep convolutional neural network for ¹⁸F-FDG PET image denoising. By training the network on high-count images post-smoothed with different Gaussian filters, 3 denoising levels are offered. The results demonstrate that all the 3 levels can achieve significant noise reduction while preserving small features and lesion SUVmax. The quantitative analysis is focused on the lesion SUVmax as it is often treated as the reference for lesion segmentation using thresholding despite being relatively sensitive to the application of denoising filters. Although not shown, the mean SUV of the lesions are consistent among the Gaussian post-smoothed images and images provided by the proposed networks.

FIG. 7(a) Network structure for AiCE; FIG. 7(b) Sample coronal slice of one testing subject before and after applying 4-mm Gaussian smoothing, AiCE-sharp, AiCE-standard and AiCE-smooth; FIG. 7(c) Box plots of the liver NSTD across the testing subjects; FIG. 7(d) Correlation plots of lesion SUVmax in each of the AiCE images with respect to that in the 4-mm Gaussian filtered input image.

## Claims

1. A method for performing neural-network-based image enhancement in a medical imaging system, the method comprising:
acquiring an image of an imaging object, the acquired image including a plurality of patches, with adjacent patches having an overlapping region;
using a trained neural network to perform image enhancement on the acquired image in a patch-by-patch manner; and
assembling a neural-network-enhanced image, based on an output from the trained neural network and a first blending function,
wherein the assembling step performs a weighted summation for each voxel in the overlapping regions based on the first blending function, so as to mitigate checkerboard artifacts in the neural-network-enhanced image.

2. The method of claim 1, wherein the step of using the trained neural network to perform image enhancement further comprises:
classifying the plurality of patches into a first group of patches and a second group of patches, based on a second blending function,
using the trained neural network to perform image enhancement on each patch of the first group of patches in a patch-by-patch manner, to derive an enhanced first group of patches, and
leaving the second group of patches unchanged by the trained neural network, and
the assembling step further comprises assembling the enhanced first group of patches and the unchanged second group of patches to generate the neural-network-enhanced image.

3. The method of claim 2, wherein the classifying step further comprises:
determining an intensity window based on the second blending function, and
for each patch of the plurality of patches,
when the patch has an intensity range inside the determined intensity window, classifying the patch into the first group of patches, and
when the patch has an intensity range outside the determined intensity window, classifying the patch into the second group of patches.

4. The method of claim 3, wherein the trained neural network was trained using a set of input patches and a corresponding set of target patches, and each input patch in the set of input patches has an intensity range inside the determined intensity window.

5. The method of claim 2, wherein the first blending function is predefined to maintain, across the overlapping regions associated with the first group of patches, an intensity transition smaller than a predefined threshold, so as to minimize the checkerboard artifacts in the neural-network-enhanced image.

6. The method of claim 5, wherein the first blending function is a Gaussian kernel function with a standard deviation equal to a fraction of a patch size of the plurality of patches.

7. The method of claim 1, wherein the assembling step further comprises, during the weighted summation for each voxel in the overlapping regions, keeping a sum of weights that is equal to 1.

8. The method of claim 1, wherein the assembling step further comprises:
during the weighted summations, when a sum of weights is not always 1 for the voxels in the overlapping regions, using a normalization map to record weights used for the voxels, and
using the normalization map to cancel out intensity changes caused in the neural-network-enhanced image by the used weights.

9. The method of claim 3, further comprising:
obtaining another image of the imaging object that is different from the neural-network-enhanced image, and
based on the second blending function, using the neural-network-enhanced image and the another image to generate a final image of the imaging object, so as to mitigate the checkerboard artifacts in the final image.

10. The method of claim 9, wherein the another image is obtained by performing a Gaussian filtering on the acquired image.

11. The method of claim 9, wherein the step of using the neural-network-enhanced image and the another image to generate the final image further comprises:
based on the second blending function, generating a first weight map for the neural-network-enhanced image and a second weight map for the obtained another image, the first weight map and the second weight map being inverse of one another, and
combining the neural-network-enhanced image and the obtained another image by performing a weighted summation based on the generated first and second weight maps, so as to mitigate checkerboard artifacts in the final image.

12. The method of claim 9, wherein the second blending function is predefined to maintain, across the overlapping regions associated with the second group of patches, an intensity transition smaller than a predefined threshold, so as to minimize the checkerboard artifacts in the final image.

13. The method of claim 3, wherein the determining step further comprises:
determining the intensity window based on an active intensity range of the second blending function, such that among the plurality of patches, patches associated with the imaging object are classified into the first group of patches, and patches associated with an air background region are classified into the second group of patches.

14. A method for performing neural-network-based image enhancement in a medical imaging system, the method comprising:
receiving a neural-network-enhanced image that is generated based on image enhancement by a trained neural network on a first image of an imaging object, the first image including a plurality of patches, with adjacent patches having an overlapping region, the trained neural network performing the image enhancement in a patch-by-patch manner;
obtaining another image of the imaging object that is different from the neural-network-enhanced image; and
based on a blending function, using the neural-network-enhanced image and the another image to generate a second image of the imaging object, so as to mitigate checkerboard artifacts in the second image.

15. The method of claim 14, wherein the another image is obtained by performing a Gaussian filtering on the first image.

16. An apparatus for performing neural-network-based image enhancement in a medical imaging system, the apparatus comprising:
processing circuitry configured to
acquire an image of an imaging object, the acquired image including a plurality of patches, with adjacent patches having an overlapping region;
use a trained neural network to perform image enhancement on the acquired image in a patch-by-patch manner; and
assemble a neural-network-enhanced image, based on an output from the trained neural network and a first blending function,
wherein the processing circuitry is further configured to, during assembling, perform a weighted summation for each voxel in the overlapping regions based on the first blending function, so as to mitigate checkerboard artifacts in the neural-network-enhanced image.

17. The apparatus of claim 16, wherein the processing circuitry is further configured to:
classify the plurality of patches into a first group of patches and a second group of patches, based on a second blending function,
use the trained neural network to perform image enhancement on each patch of the first group of patches in a patch-by-patch manner, to derive an enhanced first group of patches,
leave the second group of patches unchanged by the trained neural network, and
assemble the enhanced first group of patches and the unchanged second group of patches to generate the neural-network-enhanced image.

18. The apparatus of claim 17, wherein the processing circuitry is further configured to:
determine an intensity window based on the second blending function, and
for each patch of the plurality of patches,
when the patch has an intensity range inside the determined intensity window, classify the patch into the first group of patches, and
when the patch has an intensity range outside the determined intensity window, classify the patch into the second group of patches.

19. The apparatus of claim 16, wherein the processing circuitry is further configured to:
obtain another image of the imaging object that is different from the neural-network-enhanced image, and
based on the second blending function, use the neural-network-enhanced image and the another image to generate a final image of the imaging object, so as to mitigate the checkerboard artifacts throughout the final image.

20. The apparatus of claim 19, wherein the another image is obtained by performing a Gaussian filtering on the acquired image.
